# EUROPEAN PATENT SPECIFICATION

(11) **EP 3 053 812 B1**
(45) Date of publication and mention of the grant of the patent: **26.12.2018**
(21) Application number: 15154234.7
(22) Date of filing: 06.02.2015
(51) Int. Cl.: B62D 43/00

(54) **System and method for installing a fluid tank in a vehicle, in particular an industrial, commercial, agriculture or any other vehicle**
System und Verfahren zur Installation eines Flüssigkeitsbehälters in einem Fahrzeug, insbesondere für industrielle, kommerzielle, landwirtschaftliche oder andere Fahrzeuge
Système et procédé d'installation d'un réservoir de fluide dans un véhicule, en particulier industriel, commercial, agricole ou de tout autre véhicule

(43) Date of publication of application: 10.08.2016
(73) Proprietor: IVECO MAGIRUS AG, 89079 Ulm (DE)
(72) Inventor: Schuster, Ulrich, 89079 ULM (DE); Pohl, Harald, 89155 ERBACH (DE)
(74) Representative: Franzolin, Luigi

(56) References cited:
- EP-A1- 2 728 898
- FR-A1- 2 950 591
- US-A- 2 660 348
- US-A- 4 533 169
- US-A- 5 941 432
- US-A1- 2009 140 014

## Description

### Field of the invention

The present invention related to the field of the vehicle tanks, stably arranged onboard of vehicles. Therefore, such tanks are provided with at least an opening, for withdrawing/draining or filling a fluid stored/to be stored, stably connected with a vehicle apparatus, such as brake system or an engine fuel injection or an after treatment system, etc..

### Description of the known art

It is difficult to find a suitable installation space for components onboard of the vehicles.

The anti-pollutants restrictions impose the implementation of complex and space consuming after-treatment systems that render more and more complicate to find space suitable to install fluid tanks.

Commercial vehicles often and industrial vehicles often are equipped with pneumatic systems, for example, for the vehicle brake systems and/or for pneumatic suspensions and/or for additional apparatuses based on compressed air accumulation.

Therefore, one or more compressed air tanks should be arranged onboard for the properly functioning of the pneumatic system.

In other circumstances additional liquid tank should be arranged onboard for example for storing urea, due to the increasing necessity to store large amounts of urea used for the pollutants emission reduction.

In further circumstances it could be necessary to install a compressed or liquefied natural gas tank in order to render ecologic a vehicle.

While the liquid tanks can have any shape, the compressed gas tanks should fulfill safety restrictions imposing well determined shapes. Therefore, the arrangement of fluid tanks onboard of vehicles is becoming really complicate and in particular a further constraint could be consequence of the kind of fluid to be stored.

The vehicles are often provided with spare wheels. The commercial and industrial vehicles are often provided with very large spare wheels, that are connected to the frame though a supporting flange intended to contact the external face of the wheel rim. Screws are used to fix the rim to its supporting flange.

US2660348 discloses a system to connect a fluid tank to a vehicle by exploiting the flange supporting the spare wheel. A further relevant system for installing a fuel tank in a vehicle is disclosed in US5941432A.

### Summary of the invention

The main object of the present invention is to indicate a system and method for arranging a fluid tank onboard of a vehicle.

The main principle of the invention is to exploit the supporting flange of the spare wheel to support also a fluid tank.

According to the invention, the fluid tank is interposed between a supporting flange intended to support a spare wheel and the spare wheel itself. Therefore, the sequence is spare wheel, fluid tank and supporting flange.

Preferably, the spare wheel is reversed in order to orient the internal face of the spare wheel rim plate towards the fluid tank. Thanks to this solution, it is possible to exploit the space bounded by the wheel rim to arrange a fluid tank, and to disconnect the spare wheel from the vehicle frame, without additional and complicate operations. Therefore, this embodiment is particularly indicated when the fluid tank is continuously pipe connected with an on-board device, such as a pneumatic implant or an urea supply system.

While the outline of the fluid tank should be conceived to be inserted into the wheel rim, the height of the fluid tank can be less, equal, or more than the rim depth. According to this second case, namely when the fluid tank height is equal/similar with the spare wheel depth, the position of the spare wheel remain unchanged with respect to those solutions where the spare wheel is connected to its supporting flange through its external face. Therefore, the present solution permits not to change any of the relative positions of the pre-existent vehicle components.

According to a preferred aspect of the invention, the fluid tank is a partial or complete torus. Such compressed fluid tanks are widely used in the field of compressed CNG (compressed natural gas) equipments. Therefore, being such tanks well tested for safety reasons, they can be implemented either to store compressed air, to cooperate with vehicle pneumatic systems, or to really store CNG in those ecologic vehicles, to cooperate with the engine fuel injection system.

According to a further preferred embodiment of the invention, such known compressed fluid tank is modified by attacking connection means in order to stably connect the compressed fluid tank to the spare wheel supporting flange and to connect the spare wheel to the tank or to the spare wheel supporting flange indirectly through the connection means.

These and further objects are achieved by means of the attached claims, which describe preferred embodiment of the invention, forming an integral part of the present description.

### Brief description of the drawings

The invention will become fully clear from the following detailed description, given by way of a mere exemplifying and non limiting example, to be read with reference to the attached drawing figures, wherein:
- Fig. 1 shows a perspective view of a fluid tank interposed between a supporting flange and a spare wheel rim according to the present invention;
- Figs. 2 and 3 show two examples of fluid tanks modified according to a first embodiment of the present invention;
- Fig. 4 shows a section view according to a symmetry axis of a schematic spare wheel connected to a supporting flange according to a second embodiment of the invention;
- Fig. 4a shows a component of figure 4 in isolation. The same reference numerals and letters in the figures designate the same or functionally equivalent parts.

According to the present invention, the term "second element" does not imply the presence of a "first element", first, second, etc.. are used only for improving the clarity of the description and they should not be interpreted in a limiting way.

### Detailed description of the preferred embodiments

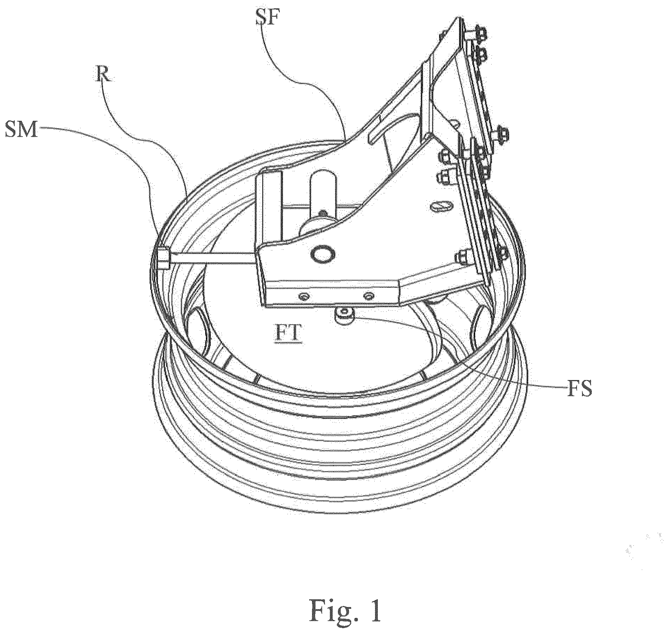

Figure 1 shows a preferred embodiment of the present invention, where it is clear that the fluid tank FT is interposed between the supporting flange SF of a spare wheel and the spare wheel thereof. For simplicity, only the rim R of the spare wheel is shown.

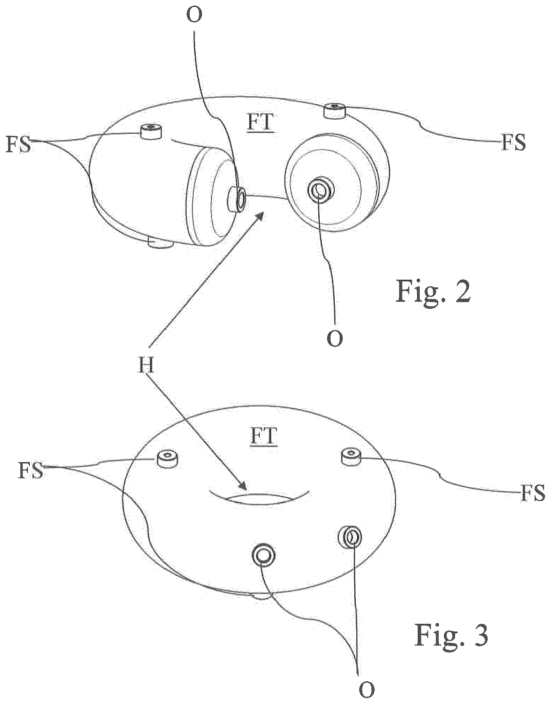

Figures 2 and 3 shows two fluid tank FT of the kind of, respectively, partial torus and complete torus.

Such shape is usually adopted for storing compressed natural gas CNG used for supplying the combustion engine of the vehicle. However any fluid, namely gas and/or liquid, can be stored in such tanks according to the present invention, for example compressed air or urea or water, according to the actual necessities.

According to the present invention, it is not
mandatory that such tanks have a torus or quasi-torus shape, they could have a parallelepiped or better a cylindrical shape, suitable to fit inner space of the rim R. The concept of inner space of the rim is clear, being known that the rim plate P intended to be screwed to the vehicle hubs or to the supporting flange - in case of spare wheel - is not symmetrically arranged within the height of the annular shape of the rim. Figure 5 clarifies this aspect. Therefore, an external face EF of the rim plate is immediately defined by the rim itself.

According to the present embodiment, instead to arrange the external face EF of the rim plate P in contact with the supporting flange SF, the rim is inverted so that the internal face of the rim plate P is in contact with the interposed fluid tank FT.

When the height of the fluid tank coincides with the depth of the internal space of the rim, the position of the spare wheel is completely unchanged with respect to the previous arrangement of the spare wheel. Therefore, according to the present invention, a traditionally unused space is advantageously utilized to store vehicle fluids.

It should be clear that the fluid tank is intended to
be stably connected to the vehicle, therefore, at least an opening O of the fluid tank is pipe communication with a vehicle apparatus, for example a compressed air brake system or an after-treatment system, or the fuel injection system of the vehicular combustion engine or any other vehicle system.

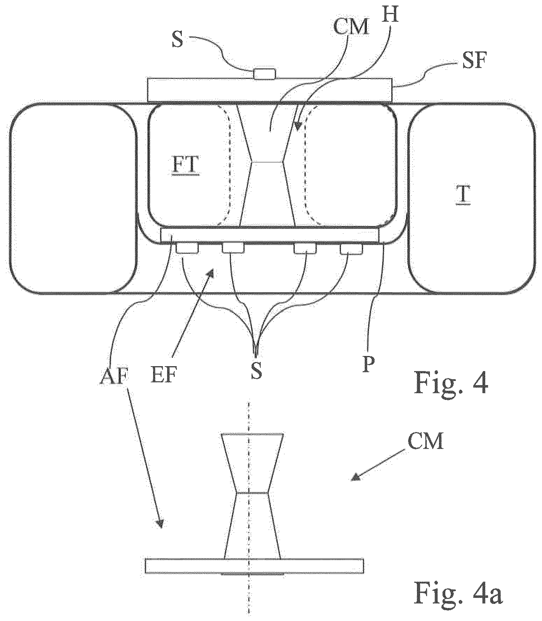

According to figure 4 and the detail shown on figure 4a, the torus or quasi-torus shape of the fluid tank is exploited to cross the hollow space H of the torus shape for supporting an auxiliary flange AF. The auxiliary flange can develop a double function, namely supporting with one face the fluid tank FT and with the opposite face the spare wheel.

Alternatively, the fluid tank is direct connected with the supporting flange and only one face of the auxiliary flange AF develops a supporting function, by supporting the spare wheel.

This solution appears to be really advantageous because, the fluid tank, in case being intended to be used and approved to store compressed gases, does not need to be modified by risking to be forced to carry out a further approval cycle.

Therefore, according to the invention the fluid tank does not support the spare wheel, anyway being interposed between the supporting flange SF and the rim of the spare wheel.

According to this second embodiment the connection
means CM comprise a first portion intended to be connected with the supporting flange, for example through one or more screws, an elongated portion crossing the hollow-axial portion of the fluid tank and an auxiliary flange AF. The latter, preferably comprises threaded hollows corresponding with the hollows of the rim plate in order to connect the spare wheel with the spare wheel with the auxiliary flange by means of screws S.

Figure 4 show schematically also the tires T; however, referring to a spare wheel in general or to its rim R is not relevant in the context of the present invention. This means that the spare wheel can be indicated simply through its rim R.

According to figure 1, a centering element can be connected with the supporting flange or auxiliary flange AF, in order to simplify the indirect connection of the spare wheel with the supporting flange. Otherwise the positioning / centering of the rim R will be realized by one or more bolt(s) / screw (s).

It should be understood that the flange SF is shown through the figures downwards oriented; however, it can be oriented in any direction, included upwards, therefore, the spare wheel would be over its flange.

It should be understood that all the single features and/or embodiments can be combined between each other. In addition, the features disclosed in the prior art background should are introduced only in order to better understand the invention and not as a declaration about the existence of known prior art. Therefore, also the features described in the prior art background can be considered in combination with those mentioned in each embodiment of the detailed description.

Further implementation details will not be described, as the man skilled in the art is able to carry out the invention starting from the teaching of the above description.

## Claims

1. Method for installing a fluid tank in a vehicle, in particular an industrial or commercial or agriculture or any other vehicle, wherein the fluid tank (FT) has a torus or quasi-torus shape defining a hollow passage (H) and the vehicle is provided with a spare wheel (R) and a vehicular spare wheel supporting flange (SF), the method comprising
- the preliminary step of preparing first connection means comprising a first portion intended to be connected to said supporting flange (SF), a second intermediated and elongated portion intended to fit across such hollow passage (H) and a third portion, opposite to said first portion with respect to said intermediate portion, comprising an auxiliary flange (AF) intended to support said rim plate (P) of the spare wheel (R) and
- the step of connecting the fluid tank (FT) to said spare wheel vehicular supporting flange (SF) so that the fluid tank (FT) is between the spare wheel (R) and its vehicular supporting flange (SF) by connecting the spare wheel to the supporting flange through said first connection means by exploiting said hollow passage and said fluid tank to the spare wheel supporting flange through second connection means, different from said fluid tank or said first connection means.

2. Method according to claim 1, wherein a rim comprises a rim plate (P) having an internal face and an external face opposite to said internal face, the internal face bounding an internal quasi-cylindrical rim cavity, the method further comprising the step of accommodating said fluid tank within said quasi-cylindrical cavity.

3. System for installing a fluid tank in vehicle according to the method of claim 1, wherein said fluid tank (FT) has a torus or quasi-torus shape and connection means (CM) exploiting an hollow passage (H) defined by said torus or quasi-torus shape to support the spare wheel and wherein said first connection means (CM) comprise a first portion intended to be connected to said spare wheel supporting flange (SF), a second intermediated and elongated portion intended to fit/cross such hollow passage (H) and a third portion, opposite to said first portion with respect to said intermediate portion, comprising an auxiliary flange (AF) intended to support said spare wheel (R).

4. Industrial or commercial or agriculture or any other vehicle comprising a spare wheel (R) and a supporting flange (SF) connected to a vehicle frame for supporting said spare wheel (R) and characterized to comprise system for installing a fluid tank according to claim 3.

5. Vehicle according to claim 4, wherein said fluid tank comprises at least one opening in pipe connection with a vehicle apparatus such as a compressed air brake system or an after-treatment system, or a fuel injection system of a vehicular combustion engine, or a vehicle device needing a fluid tank.

## Patentansprüche

1. Verfahren zur Installation eines Fluidtanks in einem Fahrzeug, insbesondere einem Industriefahrzeug, Nutzfahrzeug oder landwirtschaftlichen Fahrzeug, bei welchem der Fluidtank (FT) in Form eines Torus oder Quasi-Torus aufweist, begrenzend einen hohlen Kanal (H), welches Fahrzeug mit einem Ersatzrad (R) und einem Ersatzrad-Lagerflansch (SF) ausgestattet ist, welches Verfahren umfasst:
- den vorbereitenden Schritt der Vorbereitung erster Verbindungsmittel, umfassend einen ersten Bereich, zur Verbindung mit dem Lagerflansch (SF), einem zweiten mittleren und länglichen Bereich, zur Passung über den hohlen Kanal (H), und einen dritten Bereich, dem ersten Bereich bezüglich des mittleren Bereichs gegenüberliegend, umfassend einen Hilfsflansch (AF) zur Lagerung der Felgenplatte (P) des Ersatzrads (R), und
- den Schritt der Verbindung des Fluidtanks (FT) mit dem Fahrzeug-Ersatzrad-Lagerflansch (SF), so dass der Fluidtank (FT) zwischen dem Ersatzrad (R) und seinem Fahrzeug-Ersatzrad-Lagerflansch (SF) liegt, durch Verbindung des Ersatzrads mit dem Lagerflansch durch die ersten Verbindungsmittel durch Nutzung des hohlen Kanals und des Fluidtanks zum Ersatzrad-Lagerflansch durch zweite Verbindungsmittel, unterschiedlich von dem Fluidtank oder den ersten Verbindungsmitteln.

2. Verfahren gemäß Anspruch 1, bei welchem eine Felge eine Felgenplatte (P) umfasst, mit einer Innenfläche und einer Außenfläche, die der Innenfläche gegenüberliegt, welche Innenfläche einen inneren quasi-zylindrischen Felgenhohlraum einschließt, wobei das Verfahren ferner den Schritt der Aufnahme des Fluidtanks innerhalb des quasi-zylindrischen Hohlraums umfasst.

3. System zur Installation eines Fluidtanks in einem Fahrzeug gemäß dem Verfahren aus Anspruch 1, wobei der Fluidtank (FT) die Form eines Torus oder Quasi-Torus aufweist, und Verbindungsmittel (CM) einen Hohlkanal (H), der durch die Torus- oder Quasi-Torus-Form begrenzt wird, zur Lagerung des Ersatzrads nutzen, und wobei die ersten Verbindungsmittel (CM) einen ersten Bereich umfassen, dazu vorgesehen, mit dem Ersatzrad-Lagerflansch (SF) verbunden zu werden, einen zweiten mittleren und länglichen Bereich, vorgesehen zur Einpassung/Durchquerung des Hohlkanals (H), und einen dritten Bereich, gegenüberliegend der dem ersten Bereich mit Bezug auf den mittleren Bereich, umfassend einen Hilfsflansch (AF), vorgesehen zur Lagerung des Ersatzrads (R).

4. Industriefahrzeug, Nutzfahrzeug oder landwirtschaftliches Fahrzeug oder anderes Fahrzeug, umfassend ein Ersatzrad (R) und einen Lagerflansch (SF), verbunden mit einem Fahrzeugrahmen zur Lagerung des Ersatzrads (R), **dadurch gekennzeichnet, dass** es das System zur Installation eines Fluidtanks gemäß Anspruch 3 umfasst.

5. Fahrzeug gemäß Anspruch 4, bei welchem der Fluidtank zumindest eine Öffnung in Leitungsverbindung mit einer Fahrzeugvorrichtung wie etwa einem Druckluftbremssystem oder einem Nachbehandlungssystem, oder einem Treibstoff-Einspritzsystem eines Fahrzeugverbrennungsmotors oder einer Fahrzeugeinrichtung, die einen Fluidtank erfordert, umfasst.

## Revendications

1. Procédé pour installer un réservoir de fluide dans un véhicule, en particulier dans un véhicule industriel ou commercial ou agricole ou dans tout autre véhicule, dans lequel le réservoir de fluide (FT) présente une forme de tore ou de quasi-tore qui définit un passage creux (H), et le véhicule est muni d'une roue de secours (R) et d'un flasque de support de roue de secours de véhicule (SF), le procédé comprenant :
- l'étape préliminaire consistant à préparer un premier moyen de connexion qui comprend une première partie qui est destinée à être connectée audit flasque de support (SF), une deuxième partie intermédiaire et allongée qui est destinée à être ajustée sur ledit passage creux (H) et une troisième partie, opposée à ladite première partie par rapport à ladite partie intermédiaire, qui comprend un flasque auxiliaire (AF) qui est destiné à supporter ladite plaque de jante (P) de la roue de secours (R) ; et
- l'étape consistant à connecter le réservoir de fluide (FT) audit flasque de support de roue de secours de véhicule (SF) de telle sorte que le réservoir de fluide (FT) soit entre la roue de secours (R) et son flasque de support de véhicule (SF) en connectant la roue de secours au flasque de support par l'intermédiaire dudit premier moyen de connexion en exploitant ledit passage creux et en connectant ledit réservoir de fluide au flasque de support de roue de secours par l'intermédiaire d'un second moyen de connexion, qui est différent dudit réservoir de fluide ou dudit premier moyen de connexion.

2. Procédé selon la revendication 1, dans lequel une jante comprend une plaque de jante (P) qui comporte une face interne et une face externe opposée à ladite face interne, la face interne délimitant une cavité de jante quasi-cylindrique interne, le procédé comprenant en outre l'étape consistant à loger ledit réservoir de fluide à l'intérieur de ladite cavité quasi-cylindrique.

3. Système pour installer un réservoir de fluide dans un véhicule selon le procédé selon la revendication 1, dans lequel ledit réservoir de fluide (FT) présente une forme de tore ou de quasi-tore, et un premier moyen de connexion (CM) exploite un passage creux (H) qui est défini par ladite forme de tore ou de quasi-tore pour supporter la roue de secours et dans lequel ledit premier moyen de connexion (CM) comprend une première partie qui est destinée à être connectée audit flasque de support de roue de secours (SF), une deuxième partie intermédiaire et allongée qui est destinée à être ajustée sur ledit passage creux (H) et une troisième partie, opposée à ladite première partie par rapport à ladite partie intermédiaire, qui comprend un flasque auxiliaire (AF) qui est destiné à supporter ladite roue de secours (R).

4. Véhicule industriel ou commercial ou agricole ou tout autre véhicule comprenant une roue de secours (R) et un flasque de support (SF) qui est connecté à un châssis de véhicule pour supporter ladite roue de secours (R), et **caractérisé en ce qu'**il comprend un système pour installer un réservoir de fluide selon la revendication 3.

5. Véhicule selon la revendication 4, dans lequel ledit réservoir de fluide comprend au moins une ouverture en connexion en termes de tuyau avec un appareil de véhicule tel qu'un système de freinage à air comprimé ou un système de post-traitement, ou un système d'injection de carburant d'un moteur à combustion de véhicule, ou un dispositif de véhicule qui a besoin d'un réservoir de fluide.
